Europäisches Patentamt

European Patent Office

Office européen des brevets

(19)

(11) Veröffentlichungsnummer: **0 139 653**
**B1**

(12) **EUROPÄISCHE PATENTSCHRIFT**

(45) Veröffentlichungstag der Patentschrift:
03.09.86

(51) Int. Cl.⁴: **B 23 D 79/00**

(21) Anmeldenummer: 84900033.6

(22) Anmeldetag: 24.12.83

(86) Internationale Anmeldenummer:
**PCT/DE 83/00219**

(87) Internationale Veröffentlichungsnummer:
**WO 84/04266 (08.11.84 Gazette 84/26)**

(54) **VORRICHTUNG ZUR BEHANDLUNG VON WERKSTÜCKEN IN EINER BRENNKAMMER.**

(30) Priorität: 21.04.83 DE 3314397

(43) Veröffentlichungstag der Anmeldung:
08.05.85 Patentblatt 85/19

(45) Bekanntmachung des Hinweises auf die Patenterteilung:
03.09.86 Patentblatt 86/36

(84) Benannte Vertragsstaaten:
**DE FR GB**

(56) Entgegenhaltungen:
**WO-A-81/00819**
**DE-A-1 504 096**
**DE-A-2 322 760**
**DE-A-3 204 995**
**FR-A-2 282 612**
**US-A-2 793 969**

(73) Patentinhaber: **ROBERT BOSCH GMBH, Robert-Bosch- Platz 1, D-7016 Gerlingen- Schillerhöhe (DE)**

(72) Erfinder: **CONRAD, Hans- Jürgen, Lessingstr. 25, D-7255 Rutesheim (DE)**
Erfinder: **MAUZ, Wolfgang, Unterer Kasparswald 6, D-7022 Leinfelden- Echterdingen (DE)**
Erfinder: **SCHILDHORN, Walter, Tennhofer Weg 7, D-7012 Fellbach (DE)**

(74) Vertreter: **Röser, Peter, c/o Robert Bosch GmbH Robert- Bosch- Platz 1, D-7016 Gerlingen- Schillerhöhe (DE)**

EP 0 139 653 B1

LIBER, STOCKHOLM 1986

## Beschreibung

### Stand der Technik

Die Erfindung geht aus von einer Vorrichtung nach der Gattung des Hauptanspruches. Bei den besonders in Bezug genommenen, bekannten Maschinen zum thermischen Entgraten findet unter dem Einfluß von Wärme ein chemischer Prozeß statt. Beim thermischen Entgraten wird der abzutragende Werkstoff mit Sauerstoff oxidiert bzw. verbrannt. Der zum Entgraten notwendige Hitzeschock wird durch das Abbrennen eines Brenngas-Sauerstoff-Gemisches erzeugt, wobei z. B. Wasserstoff oder Erdgas bzw. Methan als Brenngas verwendet werden können. Um die notwendige Energie freisetzen zu können, muß das Gasgemisch vor dem Entzünden komprimiert werden. Dies geschieht im allgemeinen mit Hilfe von Dosierzylindern und Gaseinstoßzylindern. Bei bekannten Anlagen erfolgt die Vermischung und Zündung das Brenngas-Sauerstoff-Gemisches in einem separaten Mischblock.

Solche bekannten Mischeinrichtungen bestehen aus einem Gehäuse, in welchem sich die Mischkammer mit Zündeinrichtung befindet. Diese Mischkammer ist über einen verhältnismäßig langen Kanal mit der Arbeitskammer verbunden, der dem Schutz der Ventile, die zwischen dem Mischblock und der Dosiervorrichtung angeordnet sind, beim Durchzünden des stark komprimierten Gases dienen. Die Verbrennungstemperatur des Gases liegt im Bereich von 2500 bis 3500°C. Die in der Arbeitskammer auftretenden Drücke des Brenngas-Sauerstoff-Gemisches liegen bei bis zu 60 bar bei Füllung der Arbeitskammer.

Bei bekannten Anlagen zum thermischen Entgraten wird das zu bearbeitende Werkstück auf einen Schließteller aufgelegt, der dann von unten gegen die zylindrische Entgratkammer gefahren wird, um so mit dieser einen gegen hohe Drücke und Temperaturen abgedichteten Arbeitsraum zu bilden.

Bei einer anderen Ausführungsform gemäß Patentanmeldung P 32 04 995 ist die Notwendigkeit eines Mischblockes vermieden, indem die die Arbeitskammer umgebende Wand als innere Kammerwand vorgesehen ist und von einer gegenüber dieser axial verschiebbaren äußeren Kammerwand umgeben ist, wobei die Arbeitskammer beim Gasfüllvorgang mittels der äußeren Kammerwand und beim Zündvorgang mittels der inneren Kammerwand verschließbar ist. Dabei kann die innere Kammerwand Bohrungen zur Zuführung des Brenngases sowie des Sauerstoffes aufweisen, das bei gegenüber dem Schließteller gegebenem Verschluß der äußeren Kammerwand in den Arbeitsraum strömt, bevor die innere Kammerwand geschlossen wird. Hier erfolgt dann die Zündung des Brenngas-Sauerstoff-Gemisches in der Arbeitskammer. Diese Konstruktion soll der korrodierenden Wirkung des Brenngas-Sauerstoff-Gemisches bei dessen Zündung auf die Zufuhr dieses Gemisches entgegenwirken, was jedoch einen besonderen Aufwand bedeutet.

Die bekannten Vorrichtungen haben, wie vorstehend bereits angedeutet, den Nachteil, daß das Brenngas-Sauerstoff-Gemiach bei seiner Zündung nicht nur zur Entgratung der zu bearbeitenden Werkstücke führt, sondern auch korrodierend auf die Teile wirkt, mit denen es beim Zündvorgang bzw. beim Arbeitsvorgang in Berührung ist. Dies ist in beiden vorgenannten Fällen die Innenwand der Arbeitskammer und im Falle einer Vorrichtung mit Mischblock und Zufuhrkanal sowohl der Zufuhrkanal als auch der Teil des Mischblockes, in den der Zündvorgang hineinreicht. Dabei ist der Zufuhrkanal besonders gefährdet insoweit, als er an wenigstens einer Stelle bogenförmig oder abgewinkelt verläuft. Daher gilt es, für die Vorrichtungen der vorstehend diskutierten Art dieser korrodierenden Wirkung entgegenzutreten.

### Vorteile der Erfindung

Die erfindungsgemäße Vorrichtung mit den kennzeichnenden Merkmalen des Hauptanspruches hat demgegenüber den Vorteil, daß durch die Zündung des Brenngas-Sauerstoff-Gemisches unter korrodierendem Einfluß stehende, teure Verschleißteile durch widerstandsfähigere Materialien ersetzt sind, so daß sich für diese Teile wesentlich höhere Standzeiten ergeben. Es ist auch die Möglichkeit eröffnet, die erfindungsgemäßen Einsatzteile, die verhältnismäßig einfache Bauteile darstellen, auszutauschen, ohne daß dadurch der Aufbau der Vorrichtung wesentlich beeinflußt wird.

Es besteht die Möglichkeit, daß die erfindungsgemäße Auskleidung aus Keramikmaterial an den vorgesehenen Stellen, insbesondere der Innenwand der Arbeitskammer, aufgespritzt wird, wobei es zweckmäßig ist, an den für die Aufspritzung vorgesehenen Stellen geringfügige Rücknahmen der Oberfläche der an sich bekannten Kontur vorzunehmen, damit das aufgespritzte Keramikmaterial einen sicheren, formschlüssigen Halt findet.

Die Auskleidung nach der Erfindung kann jedoch auch aus eingesetzten Keramikteilen bestehen, die zweckmäßigerweise in die durch Arbeitskammer bzw. Mischblock gebildete Armierung eingeschrumpft sind. Diese eingesetzten Teile können in der passenden Form vorgefertigt sein, wobei sich nach dem Einschrumpfen ein sicherer Halt auch unter dem auftretenden Temperatureinfluß ergibt, da die genannten Keramikmaterialien hinsichtlich ihres thermischen Ausdehnungskoeffizienten sehr nahe bei dem des Materials, beispielsweise Chromstahl, liegen, aus dem die Vorrichtung in der Regel hergestellt ist.

Eine weitere oder darüber hinausgehende Möglichkeit besteht darin, daß die Keramikteile durch vorgesetzte, mit Arbeitskammer bzw. Mischblock verbundene Teile in ihrer Aufnahme in der Arbeitskammer bzw. im Mischblock gehalten sind, wobei diese vorgesetzten Teile durch Formschluß gehalten oder über eine Verschweißung mit der Arbeitskammer bzw. dem Mischblock verbunden sein können.

Die erfindungsgemäße Vorrichtung ist selbstverständlich nicht auf eine Anlage zum thermischen Entgraten von Werkstücken beschränkt, da eine derartige Anlage zahlreiche Anwendungsgebiete hat. So kann mit der dargestellten Vorrichtung ebenso z. B. das "Retikulieren von Schaumstoff" nach DE-PS 1 504 096 oder das "Verfahren zum Entfernen von zusammenhängenden porösen Formen" nach DE-PS 2 322 760 durchgeführt werden. Maßgeblich ist der Bearbeitungsvorgang an einem Werkstück mittels eines explosiven Gasgemisches in einer abgeschlossenen Kammer.

## Zeichnung

Weitere Merkmale und Einzelheiten von Ausführungsformen der Erfindung ergeben sich aus der nachfolgenden Beschreibung. In der Zeichnung zeigen:

Fig. 1 den schematischen Aufbau einer bekannten Entgratvorrichtung;

Fig. 2 das Wesentliche der Entgratvorrichtung gemäß Fig. 1 nach einer ersten erfindungsgemäßen Ausführungsform;

Fig. 3 das Wesentliche der Entgratvorrichtung gemäß Fig. 1 nach einer zweiten Ausführungsform gemäß der Erfindung;

Fig. 4 den Mischblock gemäß Fig. 3 in zwei um 90° gedrehten Schnittansichten;

Fig. 5 die Arbeitskammer einer Entgratvorrichtung nach einer weiteren Ausführungsform der Erfindung und

Fig. 6 die Arbeitskammer gemäß Fig. 3 in abgeänderter Konstruktion.

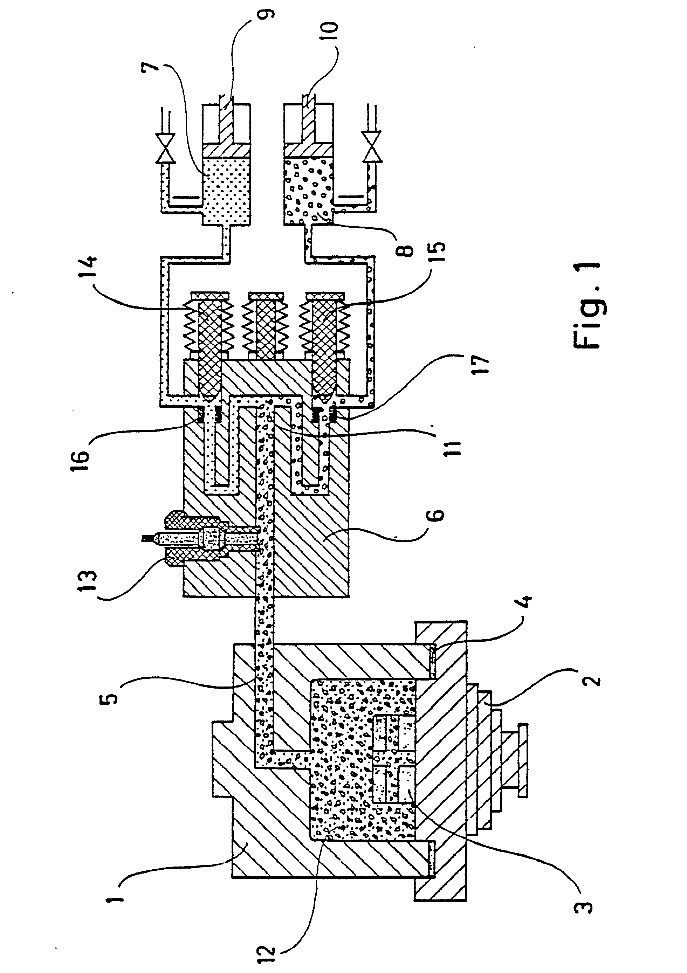

Gemäß Fig. 1 besteht eine Vorrichtung zum Entgraten von Werkstücken im wesentlichen aus einer Arbeitskammer 1, die von einem nicht dargestellten Maschinengestell getragen wird. Die Arbeitskammer ist von unten durch einen Schließteller 2 für den Entgratvorgang verschließbar, der, nachdem ein Werkstück 3 aufgelegt ist, von unten gegen die Arbeitskammer 1 gehoben und mit dieser über eine Dichtung 4 temperatur- und druckdicht verbunden wird. Der Schließteller 2 ist an dem erwähnten, nicht dargestellten Maschinengestell hydraulisch oder mechanisch heb- und senkbar.

An die Arbeitskammer 1 schließt sich über einen Zufuhrkanal 5 ein Mischblock 6 an, dem Brenngas 7 und Sauerstoff 8 über Dosier- und Gaseinstoßzylinder 9 und 10 zugeführt werden. An der Stelle 11 wird das Brenngas-Sauerstoff-Gemisch gebildet, das dann über den Kanal 5 in die Brennkammer 12 gelangt.

Für den Zündvorgang, der durch die Zündkerze 15 ausgelöst wird, wird die Verbindung zwischen den Zylindern 9, 10 einerseits und dem Mischblock 6 andererseits über Ventile 14 und 15 durch deren Verschließung unterbrochen, wobei diese Ventile, die in nicht dargestellter Weise hydraulisch betätigt sein können, auf Ventilringen 16 und 17 zum Aufsitzen kommen.

Bei dem nun durch die Zündkerze 13 zum Zünden gebrachten Brenngas-Sauerstoff-Gemisch erfolgt die Entgratung des Werkstückes 3. Dieser Vorgang geschieht in äußerst kurzer Zeit, wobei nur das Gratmaterial überhitzt und damit abgebrannt wird, während die übrigen Teile lediglich in erträglichen Grenzen erwärmt werden.

Nach Beendigung dieses Arbeitsvorganges wird der Schließteller nach unten abgesenkt und es wird das bearbeitete Werkstück durch ein zu bearbeitendes Werkstück ersetzt, woraufhin der Vorgang sich in der beschriebenen Weise wiederholt.

Obwohl die zur Vorrichtung gehörenden Teile durch die Zündung des Brennstoff-Sauerstoff-Gemisches nur in erträglichen Grenzen erwärmt werden, übt doch das Abbrennen dieses Gemisches im Laufe der Zeit eine korrodierende Wirkung auf die beim Zünden mit dem Gemisch in Berührung stehenden Flächen der Vorrichtung aus, so daß diese Flächen einem gewissen Verschleiß unterliegen, der in Abständen ein Auswechseln der diese Flächen aufweisenden Teile notwendig macht. Dies sind im wesentlichen die Arbeitskammer 1 und der Mischblock 6, innerhalb dessen der Abbrennvorgang bis zu den Ventilringen 16, 17 vordringen kann.

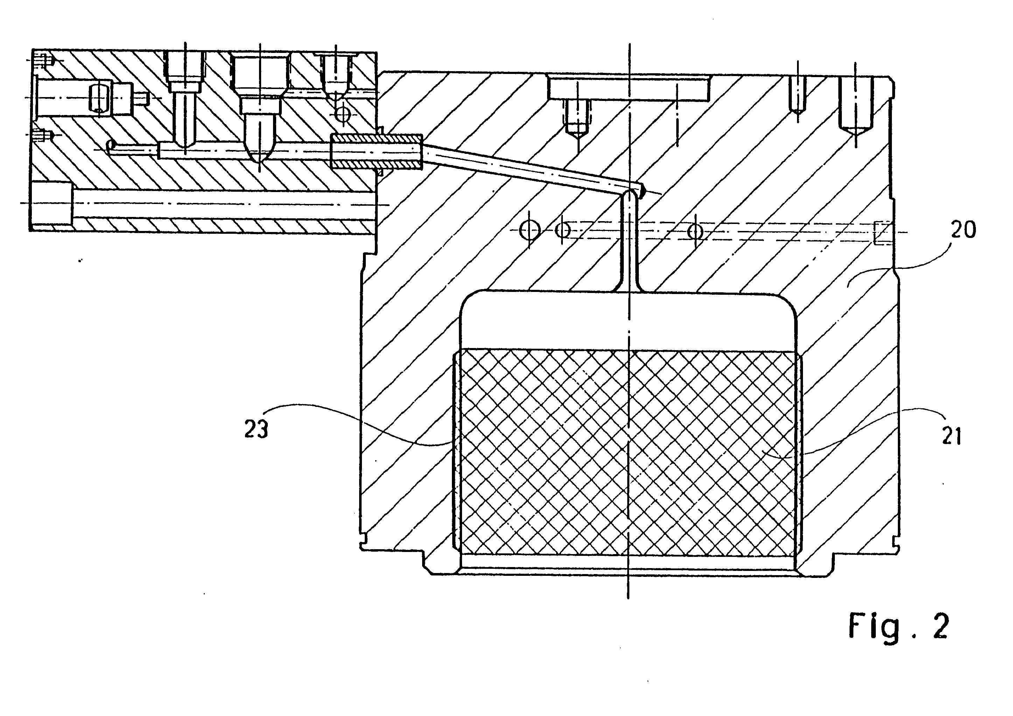

Um dem zu begegnen, ist bei der mehr im Detail gezeichneten Vorrichtung gemäß Fig. 2 vorgesehen, die zylindrische Innenwandung der Arbeitskammer 20 mit einem Mantel 21 aus Keramikmaterial in Form von Aluminiumoxid oder Zirkondioxid auszukleiden. Im dargestellten Falle ist die Auskleidung 21 aufgespritzt, wobei die Innenwandung der Arbeitskammer 20 in Radialrichtung gesehen eine geringfügige Rücksetzung 23 aufweist, damit das aufgespritzte Keramikmaterial eine formschlüssige Verbindung mit der Arbeitskammer 20 bilden kann.

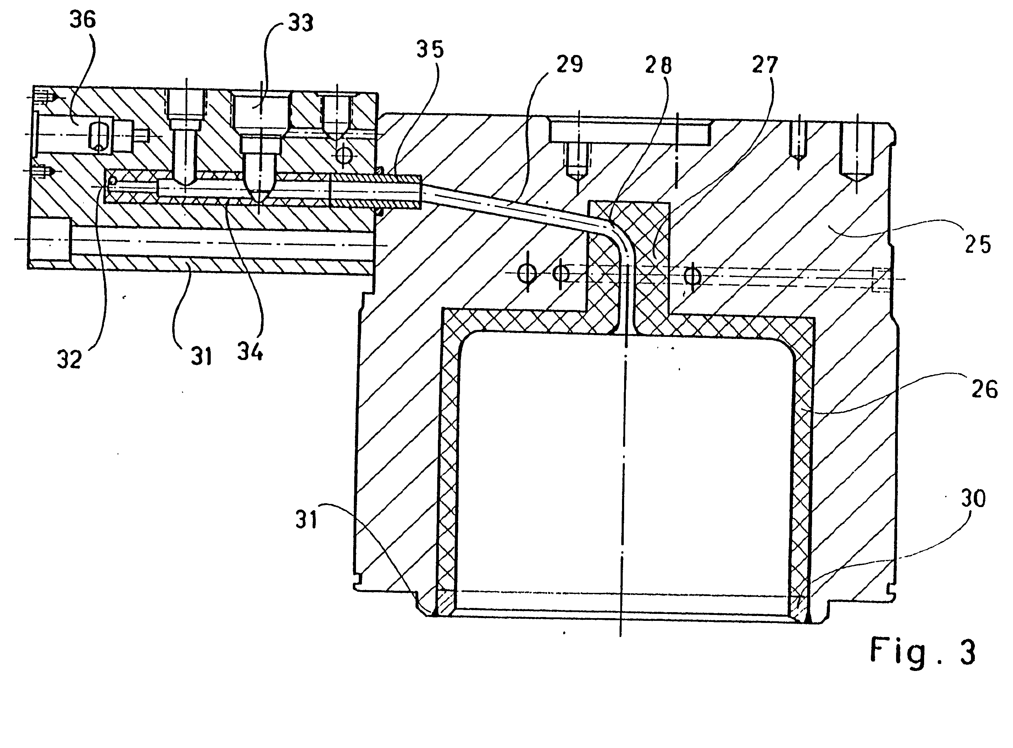

Nach einem weiteren Beispiel gemäß Fig. 3, das der Ausbildung gemäß Fig. 2 konstruktiv sehr ähnlich ist, ist in die Arbeitskammer 25 ein Einsatz 26 eingeschrumpft, der mit einem Fortsatz 27 auch in den Kopf der Arbeitskammer 25 hineinragt, um dort eine Ablenkungsstelle 28 des Zufuhrkanals 29 miteinzuschließen, die besonders korrosionsgefährdet ist. Der Einsatz 26 ist im übrigen nach unten hin durch einen Ring 30 gehalten, der bei 31 mit dem Material der Arbeitskammer 25 verschweißt ist und gemeinsam mit der Arbeitskammer die Aufsitzstelle für die anhand der Fig. 1 mit der Ziffer 4 dargestellte Dichtung gegenüber dem Schließteller bildet.

Außerdem zeigt Fig. 3 den Mischblock 31, bei dem bei 32 die Mischung des Brenngas-Sauerstoff-Gemisches stattfindet, von wo aus das Gemisch entlang der Zündkerze, von der hier nur die Aufnahmebohrung 33 dargestellt ist, zum Zufuhrkanal 29 strömt. In der Bohrung des Mischblockes befindet sich ein Einsatz 34 aus Keramikmaterial, der formschlüssig durch einen Verbindungsstutzen 35 zwischen Arbeitskammer 25 und Mischblock festgehalten wird. Bei 36 ist eine von den Bohrungen ersichtlich, in denen die Ventile 14, 15 gemäß Fig. 1 verschiebbar sind.

Beim Gegenstand der Fig. 3 können die Einsätze 26, 27 bzw. 34 ausgewechselt werden. Dies ist bezüglich des Einsatzes 34 aus Keramikmaterial durch einfaches Herausnehmen möglich, während für die Herausnahme des Einsatzes 26, 27 der Ring 30 gelöst werden muß und das Einschrumpfen dieses Einsatzes durch Erwärmung der Arbeitskammer 25 rückgängig gemacht werden muß, woraufhin dann ein neuer Einsatz 26, 27 wieder eingeschrumpft bzw. ein neuer Einsatz 34 in den Mischblock 31 eingesetzt werden kann.

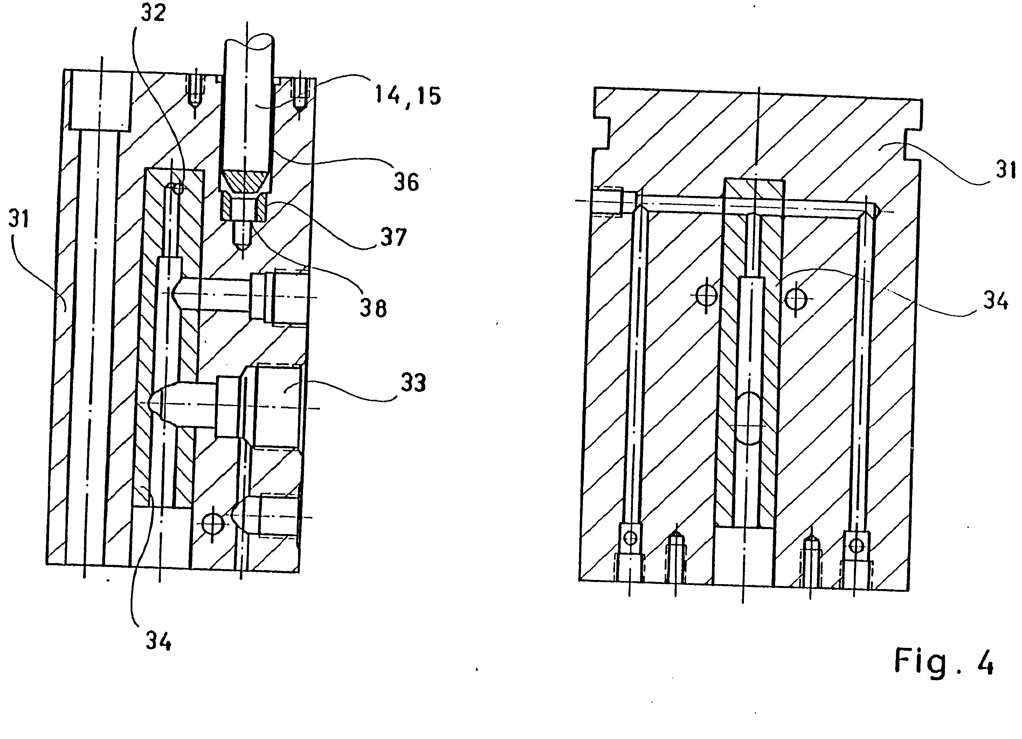

Der Mischblock 31 ist noch einmal genauer in zwei Schnittansichten in Fig. 4 dargestellt. Hier ist wiederum der Einsatz 34 aus Keramikmaterial ersichtlich. Außerdem ist mehr ins einzelne dargestellt die Bohrung 36 für eines der Ventile 14, 15 gemäß Fig. 1, wobei hier dargestellt ist, daß die Ventilringe 37, die den Ventilringen 16, 7 gemäß Fig. 1 entsprechen, ebenfalls aus Keramikmaterial bestehen können, da auch hier bei der Zündung des Brenngas-Sauerstoff-Gemisches mit Korrosion gerechnet werden muß. Die Ventilringe 37 können ebenfalls als Austauschteile einfach in den ihren Sitz bildenden Bohrungsabschnitt gegen die Anlage 38 eingesteckt sein.

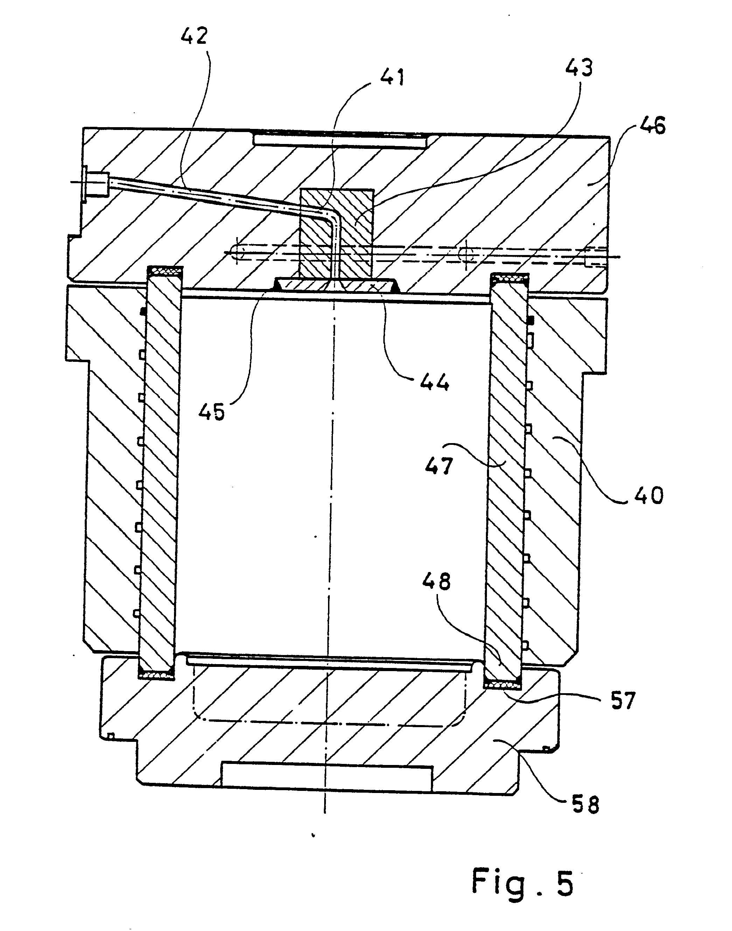

Fig. 5 zeigt lediglich eine Arbeitskammer 40, bei der die Knickstelle 41 der Zufuhrleitung 42 für das Brenngas-Sauerstoff-Gemisch durch einen Einsatz 43 aus Keramikmaterial armiert bzw. geschützt ist. Der Einsatz 43 wird durch ein vorgesetztes Teil 44 an Ort und Stelle gehalten, das bei 45 mit dem Haupt 46 der Arbeitskammer 40 verschweißt ist. Fig. 5 zeigt im übrigen das Beispiel einer sog. geteilten Brennkammer, deren Haupt 46 ein eigenes Bauteil darstellt, das mit dem zylindrischen Mantel in irgendeiner Form, beispielsweise durch achsparallele Schrauben, fest verspannt ist, von dem Mantel aber dadurch gelöst werden kann, um den Austausch des Einsatzteiles 43 über das Lösen des Teiles 44 zu erleichtern.

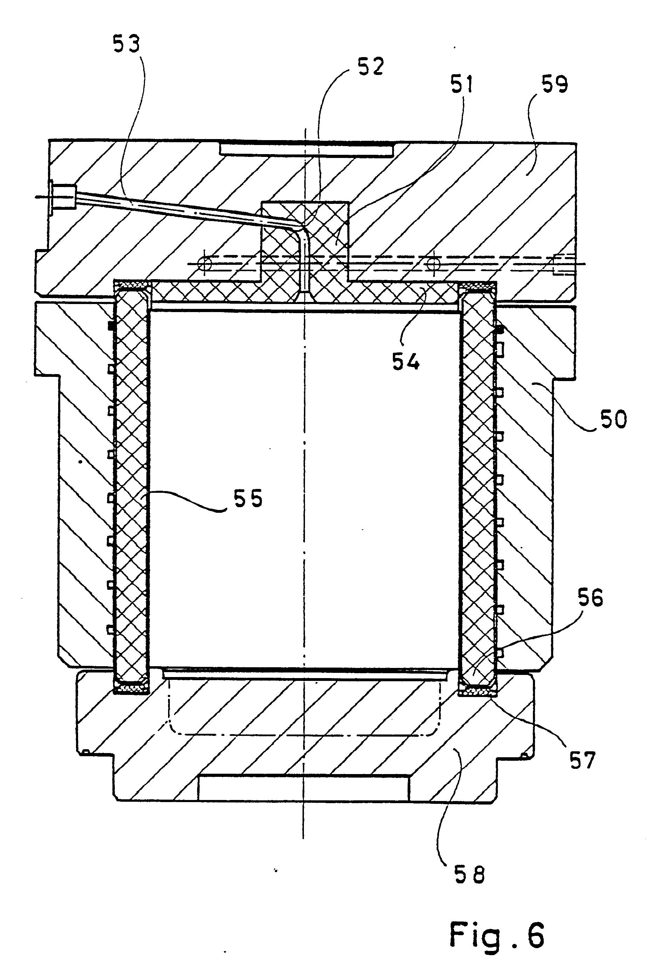

Fig. 6 zeigt eine Arbeitskammer 50, die in ihrem Grundaufbau mit der Arbeitskammer gemäß Fig. 5 übereinstimmt. Hier ist jedoch im Kopfteil 59 ein Einsetz 51 eingeschrumpft, der sowohl die Knickstelle 52 der Zufuhrleitung 53 für das Brenngas-Sauerstoff-Gemisch umfaßt als auch die obere waagerechte Fläche der Brennkammer. Der zylindrische Mantelteil der Arbeitskammern 40, 50 ist mit einer hülsenförmigen Auskleidung 47 bzw. 55 versehen, die hier ebenfalls eingeschrumpft ist und gleichzeitig auch nach unten den vorstehenden Bund 48 bzw. 56 bildet, der mit der Dichtung 57 gegenüber dem Schließteller 58 in dichtenden Eingriff gebracht wird.

Dadurch, daß bei den Ausführungsformen, wie sie anhand der Fig. 2 bis 6 beschrieben sind, wesentliche, bei der Zündung des Brenngas-Sauerstoff-Gemisches mit diesen in Berünrung stehenden Teile durch Keramikmaterial ausgekleidet sind, ist verhindert, daß diese im Bereich der Auskleidungen korrodieren können, so daß insofern keine Beeinträchtigung der Vorrichtung zum thermischen Entgraten stattfinden kann. Die Keramikteile sind weitgehend als Einsatzteile ausgebildet, die ausgewechselt werden können, ohne daß die Vorrichtung im übrigen beeinträchtigt ist.

## Patentansprüche

1. Vorrichtung zur Behandlung von Werkstücken (3) mittels Temperatur- und Druckstößen durch Zündung eines Gasgemisches, insbesondere thermische Entgratanlage, mit einer mittels eines Schließteller (2) verschließbaren Arbeitskammer (25, 40) zur Aufnahme des Werkstückes, wobei an die Arbeitskammer ggf. ein Mischblock (31) zur Vermischung und Zündung des Brenngas-Sauerstoff-Gemisches über einen das dem Schließteller gegenüberliegende Kopfteil (46) der Arbeitskammer durchquerenden und in der Arbeitskammer mündenden Zufuhrkanal (29, 42, 53) angeschlossen ist, dadurch gekennzeichnet, daß die Arbeitskammer (20, 25, 40, 50) und ggf. der Zufuhrkanal (29, 42, 53) und der Mischblock (31) wenigstens teilweise mit einer Auskleidung (21; 26, 27; 34; 43; 51, 55) aus Keramikmaterial z.B. in Form von Aluminiumoxid oder Zirkondioxid versehen ist.

2. Vorrichtung nach Anspruch 1, dadurch gekennzeichnet, daß die Auskleidung (21) aus aufgespritztem Keramikmaterial besteht.

3. Vorrichtung nach Anspruch 1, dadurch gekennzeichnet, daß die Auskleidung (26, 27; 34; 43; 47; 51, 55) aus eingesetzten Keramikteilen besteht.

4. Vorrichtung nach Anspruch 5, dadurch gekennzeichnet, daß die Keramikteile in die durch die Arbeitskammer bzw. den Mischblock gebildete Armierung eingeschrumpft sind.

5. Vorrichtung nach Anspruch 3 oder 4, dadurch gekennzeichnet, daß die Keramikteile (26, 27; 34; 45) durch vorgesetzte, mit der Arbeitskammer (25, 40) bzw. dem Mischblock (31) verbundene Teile (50, 35, 44) in ihrer Aufnahme in der Arbeitskammer bzw. im Mischblock gehalten sind.

## Claims

1. Device for treating workpieces (3) with temperature and pressure shocks by igniting a gas mixture, especially a thermal deburring installation, with a work chamber (25, 40), which can be closed by a closing disc (2), for receiving the workpiece, a mixing block (31) for mixing and igniting the fuel gas/oxygen mixture being connected, if appropriate, to the work chamber via a supply channel (29, 42, 53) passing through the head part (46), located remote from the closing disc, of the work chamber and ending in the work chamber, characterized in that the work chamber (20, 25, 40, 50) and, if appropriate, the supply channel (29, 42, 53) and the mixing block (31) are at least partially provided with a coating (21; 26, 27; 34; 43; 51, 55) of a ceramic material, for example in the form of alumina or zirconia.

2. Device according to claim 1, characterized in that the coating (21) consists of a ceramic material sprayed on.

3. Device according to claim 1, characterized in that the coating (26, 27; 34; 43; 47; 51, 55) consists of inserted ceramic parts.

4. Device according to claim 3, characterized in that the ceramic parts are shrunk into the reinforcement formed by the work chamber or the mixing block.

5. Device according to claim 3 or 4, characterized in that the ceramic parts (26, 27; 34; 43) are held in their fitting in the work chamber or in the mixing block by parts (30, 35, 44) placed in front and joined to the work chamber (25, 40) or to the mixing block (31).

## Revendications

1°) Dispositif pour le traitement de pièces (3) par des chocs de température et de pression, par allumage d'un mélange de gaz, notamment installation d'ébarbage thermique, comportant une chambre de travail (25, 40) susceptible d'être fermée par un plateau de fermeture (2) pour recevoir la pièce, la chambre de travail et, le cas échéant, un bloc de mélange (31) étant relié à un canal d'alimentation (29, 42, 53) traversant la chambre de travail et débouchant dans celle-ci dans la tête (46), opposée au plateau de fermeture pour mélanger et allumer le mélange gaz combustible-oxygène, dispositif caractérisé en ce que la chambre de travail (20, 25, 40, 50) et le cas échéant, le canal d'alimentation (29, 42, 53) et, le bloc de mélange (31) sont au moins partiellement revêtus d'un revêtement (21, 26, 27, 34, 43, 51, 55) en matière céramique par exemple de l'oxyde d'aluminium ou de l'oxyde de zirconium.

2°) Dispositif selon la revendication 1, caractérisé en ce que le revêtement (21) est en matière céramique projetée.

3°) Dispositif selon la revendication 1, caractérisé en ce que le revêtement (26, 27, 34, 43, 47, 51, 55) est en pièce de matière céramique insérée.

4°) Dispositif selon la revendication 3, caractérisé en ce que les pièces en matière céramique sont fixées par retrait dans l'armature constituée par la chambre de travail et/ou le bloc de mélange.

5°) Dispositif selon la revendication 3 ou 4, caractérisé en ce que les pièces en matière céramique (26, 27, 34, 43) sont maintenues dans la chambre de travail ou dans le bloc de mélange par des pièces (30, 35, 44) préalablement reliées à la chambre de travail (25, 40) ou au bloc de mélange (31).

Fig. 1

Fig. 2

Fig. 3

Fig. 4

Fig. 5

Fig.6